# EUROPEAN PATENT SPECIFICATION

(11) **EP 0 643 751 B1**
(45) Date of publication and mention of the grant of the patent: **24.04.1996**
(21) Application number: 93913717.0
(22) Date of filing: 27.05.1993
(51) Int. Cl.: C09J 161/00, C08G 12/00

(54) **METHOD OF GLUING WOOD-BASED PRODUCTS**
VERFAHREN ZUM VERLEIMEN VON AUF HOLZ BASIERENDEN ERZEUGNISSEN
PROCEDE POUR COLLER DES PRODUITS A BASE DE BOIS

(30) Priority: 04.06.1992 SE 9201731
(43) Date of publication of application: 22.03.1995
(73) Proprietor: CASCO NOBEL AB, S-100 61 Stockholm (SE)
(72) Inventor: LINDH, Ingvar, S-161 52 Bromma (SE)
(74) Representative: Schöld, Zaid
(86) International application number: SE9300473
(87) International publication number: WO9324582

(56) References cited:
- US-A- 4 957 999

## Description

The present invention relates to a method of gluing wood-based products by means of amino-resin-based adhesives. More specifically, the invention relates to a gluing method in which certain alkylamine salts are used as hardener for the amino resin. The invention also comprises a hardener composition for amino resins.

Amino resins constitute precondensates of amine-containing compounds and formaldehyde. There most important use is as binders for cellulose-based products. Acids or acid containing substances are normally used as hardeners for these resins, which hardeners when admixed to the resin lead to final curing.

When gluing wood, it is known to mix a liquid resin component with a powder or liquid hardener composition and subsequently apply the thus obtained adhesive mixture to one or both joint faces and, after joining thereof, press the glue line either at room temperature or at an increased temperature, the temperature in the glue line normally reaches to about 80-110°C. Since in this procedure the resin and the hardener are mixed in advance, use is made of hardener compositions which allow a pot life for the adhesive mixture. By pot life is meant the time during which the adhesive mixture is of such low viscosity that it can be applied. It is well known that working with curing adhesive systems frequently causes problems with precuring during the application of the adhesive before pressure is applied. This is particularly evident in fast adhesive systems. Precuring also causes problems in the mixing and application equipment, especially during breakdowns, thus necessitating frequent cleaning of the equipment. Therefore it is an advantage if the pot life is as long as possible. However, it is also necessary to have short press times in order to obtain a rate of production which is as high as possible. Short press times, however, require adhesives with fast curing. A further essential parameter of the adhesive systems is the press temperature. In adhesive formulations were glue and hardener are mixed, one strives to achieve optimal balance of a long pot life against fast curing at low press temperatures. However, it has proved to be difficult to accomplish this using the hardeners that are available on the market. The known hardeners which have a long pot life require in many cases a relatively high temperature to yield an acceptably short press time. On the other hand, hardeners which allow fast curing at lower temperatures often have a relatively short pot life. One known way of solving the pot life problem is to apply resin and hardener separately, which makes it possible to use hardeners that allow fast curing at acceptable temperatures. However, problems with precuring may arise here as well, in the event of a breakdown.

The present invention as defined in the claims concerns an improved method of gluing wood-based products by means of amino-resin-based adhesives. According to the invention, the amino resin is cured with a hardener composition containing alkylamine salts selected from a group consisting of the following compounds:

NH₂((CH₂)ₙNH)ₘH x lX

- wherein: n = 2
m = 1 - 3
1 = 1 - 4
and X is an organic or inorganic acid 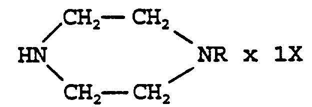 wherein R = H or CH₂CH₂NH₂ and X an acid as above and 1 = 1-3;
and CH₂CH₂(NHCH₂CH₂CH₂NH₂)₂ x 1X wherein 1 = 1 - 4 and X has the same meaning as above. It has surprisingly been found that when gluing wood-based products with these alkylamine salts, resin-hardener compositions were obtained which yield very fast final curing at relatively low press temperatures, but yet with a long pot life. The fast curing process results in considerably reduced press times. Other properties which are also improved are formaldehyde emission, water resistance as well as the open and closed assembly time, i.e. the time from applying the adhesive mixture until the materials are hot-pressed, With the method according to the invention, emission values of formaldehyde are obtained below the E1 limit. The open and closed assembly time is extended and the water resistance according to BS 1204, close contact and moisture resistance (MR) is improved.

Alkylamine salts as mentioned above are known in combination with amino resins. For example, SU 1,346,614 mentions ethylenediamine x HCl as a hardener component for carbamide resins in cement. SU 509,615 discloses a reaction product of an organic amine, such as ethylene amine, and an acid, as modifier for carbamide resin for the coating of paper. However, the excellent properties of the compounds in gluing of wood-based products have not been demonstrated.

Examles of useful amine salts in the stated group are ethylenediamine dihydrochloride, diethylenetriamine trihydrochloride, N,N'-bis(3-aminopropyl)ethylenediamine tetrahydrochloride, piperazine hydrochloride, aminoethyl piperazine hydrochloride. In addition to hydrochloric acid, the amine salt can be formed from other inorganic or organic acids, such as for example sulphuric acid, phosphoric acid, paratoluene sulphonic acid, sulfamic acid. The sulfamic acid has the advantage that the amine salt is less corrosive than the salts with e.g. hydrochloric acid. Preferred salts are the salts of ethylenediamine and especially the sulfamic acid salt of ethylenediamine. As is apparent from the formulae above, the amine salt should be at least a difunctional salt. This increases the possibility of crosslinking when curing the resin.

By amino resins are meant condensates of formaldehyde and compounds containing an amino group -NH2, among which the most common ones are urea and melamine. Other amine compounds such as guanamines (aryl, alkyl), ethylene urea, thiourea, dicyandiamide, guanidines may also be used. The molar ratio of formaldehyde to amine compound is essential for the properties of the resin. Such properties as final curing speed, pot life, quality of the glue line vary according to the molar ratio used. Concerning for example urea/formaldehyde resins, the most common amino resin, the differences in properties will be great if the molar ratio of formaldehyde/urea (F/U) varies between for example 1.3 and 2.0. A UF resin having an F/U ratio = 1.3 and a UF resin having an F/U ratio = 1.7 each containing 1% (by weight) of ethylenediamine dihydrochloride, will result in different performance of the resin. For example, the pot life of the resin having an F/U ratio of 1.3 will be 90 min. at 20°C, and of the resin having an F/U ratio of 1.7 15 min. at 20°C. The final curing will, however, be much faster in the resin having an F/U ratio = 1.7. As a guide line for the amino resins which are used according to the invention, a molar ratio of F/U of 0.85-2.5, preferably 1.01-1.9 and most preferred 1.2-1.7 may be given. The pH of the resin is also important. Suitable values are 6.0 to 11.0, preferably 7.0 to 9.0.

In the gluing method according to the invention, the alkylamine salt is added to the amino resin in the form of a hardener composition. The hardener composition may be a liquid as well as powder. The amount of amine salt to be included in a liquid hardener composition should be relatively large, but is restricted by other soluble components in the composition. Such a component is a formaldehyde absorbent which usually is urea. The formaldehyde absorbent is added to bind free formaldehyde and free methylol groups in the adhesive mixture. This addition also has a controlling effect on the pot life. Moreover, the relatively high concentration of alkylamine salt strongly contributes to the formaldehyde-absorbing effect, since amino groups thereof can absorb free formaldehyde and/or react with methylol groups.

The hardener composition according to the invention also contains conventional fillers such as kaolin, gypsum, chalk, wood flour, olive-stone meal, coconut-shell meal, walnut-shell meal, flour of cereal grains, cellulose, starch. Kaolin is a preferred filler for liquid hardener compositions.

It is also suitable for the hardener composition to contain a thickener. Known thickeners such as carboxymethyl cellulose products and polyvinyl alcohol can be used.

The hardener composition is water-based, but the water contents may to a small extent be replaced with some solvent, e.g. alcohols. In addition to the alkylamine salt, the hardener can also contain conventional hardeners, for example ammonium chloride, aluminium sulphate, aluminium chloride, magnesium chloride, ammonium sulphate, ammonium sulphamate, Lewis acids. The composition can also contain small amounts of common additives such as antifoaming agents, antimould agents, colorants, stabilisers etc.

The different components of the water-based hardener composition can be included in the hardener in the following amounts: Alkylamine salt 0.2-50% by weight, preferably 1-35% by weight and most preferred 2-25% by weight. The filler content should be 5-65% by weight, preferably 15-55% by weight and most preferred 25-50% by weight. The content of thickener is suitably in the range of 0.1-10% by weight, preferably 0.3-7% by weight and most preferred 0.4-4% by weight. The amount of formaldehyde absorbent can be anything from 0 to 50% by weight, preferably between 10 and 45% by weight and most preferred 15-35% by weight. The amounts are expressed in per cent by weight of the entire composition.

In the given ranges of the different components of the hardener composition, different dry solids contents and viscosities may be obtained for different, selected materials. The dry solids content should, however, be adjusted to 15-85% by weight, preferably 30-85% by weight and most preferred 35-85% by weight.

The viscosity should be adjusted to 800-25000 mPas, preferably 1000-15000 mPas and most preferred 2000-12000 mPas at 20°C. The pH of the hardener composition varies with the buffering capacity, but is suitably 0-8, preferably 1-6.5 and most preferred 1.5-6. The final pH of the hardener composition is adjusted by adding an acid or a base.

The alkylamine salts according to the invention can also be used as powder hardeners. In a powder hardener, the components are included in the following amounts: Alkylamine salt: 2-70% by weight and preferably 3-50% by weight. The filler is included in an amount of 10-60% by weight and preferably 20-50% by weight. The formaldehyde absorbent is included in an amount of 5-60% by weight and preferably 10-50% by weight. Also a thickener is included in an amount of 0.08-10% by weight and preferably 0.1-5% by weight. The same additions as those mentioned above are also included.

Depending on the components selected, the hardener composition can be prepared either by simple mixing of the components independently of the sequence, or a more planned sequence of adding may be required. From a general point of view, the filler should be added after adding the other components to the aqueous phase.

The amount of hardener composition that should be added to the resin varies depending on, inter alia, the amount of alkylamine salt included in the hardener composition. As a guide line, it can be mentioned that to 100 parts resin is added suitably 1-40 parts by weight of the hardener composition, preferably 5-25 parts by weight.

The invention will now be described in more detail by means of the following Examples which, however, are not intended to restrict the invention. By parts and per cent in the Examples are meant parts by weight and per cent by weight, if not otherwise stated.

### Example 1

Six different adhesive compositions were prepared by adding to a formaldehyde/urea resin six different hardener compositions, three according to the invention and three conventional hardeners. The amounts of the different adhesive compositions are shown in Table 1:

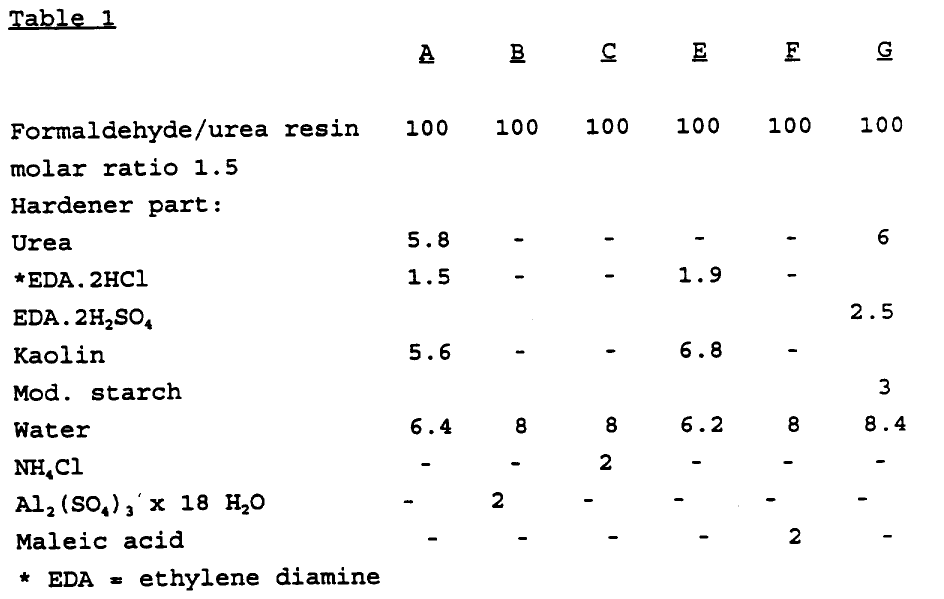

The different adhesive compositions were applied in an amount of 100 g/m to a particle board 15 x 15 cm. A 0.6 mm beech veneer was applied to the particle board. The veneered particle board was inserted into a press (Carver press) and pressed at 70 and 100°C, respectively. Pressure and temperature were maintained constant and the press time necessary to reach an approved gluing was measured for the different compositions at the respective temperatures. For all compositions, also the gel time at 50 and 90°C was measured. The gel time was measured by stirring the adhesive mixture at the respective temperatures until the mixture had gelled, i.e. until stirring is impossible or until the adhesive mixture looses its tack. The gel time is the time from the start of the heating until the adhesive has solidified. Also the pot life was measured by measuring the time from the completed mixing of resin and hardener until the viscosity of the mixture exceeds 25000 mPas at which point it is considered too thick to be applied by existing methods. Table 2 below shows the values obtained for the different adhesive mixtures, A, E and G are according to the invention and B, C and F are comparative tests:

**Table 2 :**

| | A | B | C | E | F | G |
|---|---|---|---|---|---|---|
| Gel time 50°C/min. | 4.4 | 3.0 | 35 | 3.3 | 0.4 | 5.0 |
| Gel time 90°C/sec. | 90 | 85 | 200 | 75 | <0.4 | 105 |
| Min. press time 70°C (sec.) | 180 | 80 | - | 70 | - | 130 |
| Min. press time 110°C (sec.) | 35 | - | 80 | 15 | - | 30 |
| Modified Roffael test mg/m per 24 hours | 23.3 | 43.9 | - | 51.6 | - | |
| Pot life (20°C) | 1.5h | 35min. | >8h | 1h | 1min. | 70min. |

The results show the advantages of the present invention. A comparison between B, with aluminium sulphate as hardener (aluminium sulphate is a fast hardener) and E according to the invention, shows that the hardener according to the invention has a shorter gel time at 90°C and a shorter press time at 70°C but despite this the pot life is almost twice as long. A comparison between A according to the invention and C shows that although A is such a fast hardener as compared to C, it still has a pot life of as much as 1.5 h.

### Example 2:

Further adhesive compositions were prepared according to Example 1, composed according to Table 3 below.

**Table 3**

| | H | I | J | K | L | M |
|---|---|---|---|---|---|---|
| Formaldehyde/urea resin | 100 | 100 | 100 | 100 | 100 | 100 |
| molar ratio 1.5 | | | | | | |
| Hardener part: | | | | | | |
| Urea | | | | | | |
| ∗EDA.2HCl | 1 | | | | | |
| EDA.2NH₂SO₃H | | 1.9 | | | | |
| EDA.2PTS | | | 3.1 | | | |
| PIPHCl | | | | 1.2 | | |
| AEP2HCL | | | | | 1.5 | |
| AEP3HCL | | | | | | 1.8 |
| Kaolin | | | | | | |
| Mod. starch | | | | | | |
| Water | | | | | | |

In the same manner as in Example 1, the gel time and pot life were measured, resulting in the following values:

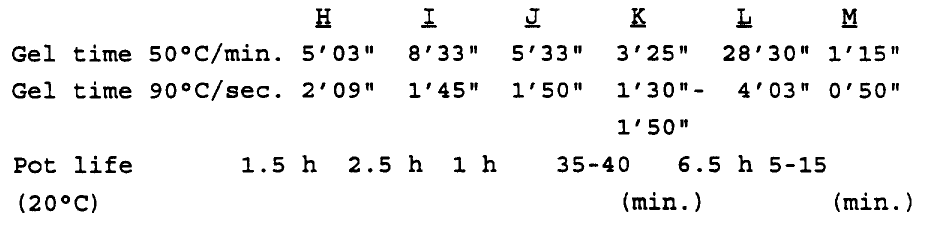

In Example 2, the meanings of the abbreviations are as follows:
- PTS =: paratoluene sulphonic acid
- PIP =: piperazine
- AEP =: aminoethyl piperazine

## Claims

1. Method of gluing wood-based products by means of amino-resin-based liquid adhesive compositions, wherein the amino resin is cured by means of a hardener composition containing alkylamine salt, **characterised** in that the alkylamine salt is selected from a group consisting of the following compounds:
NH₂((CH₂)ₙNH)ₘH x lX
wherein n = 2
m = 1 - 3
l = 1 - 4
and X is an organic or inorganic acid; 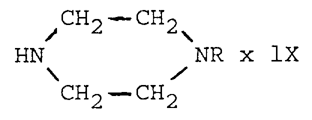 wherein R = H or CH₂CH₂NH₂ and X an acid as above and l = 1 - 3;
and
CH₂CH₂(NHCH₂CH₂CH₂NH₂)₂ x lX
wherein l = 1 - 4 and X has the same meaning as above.

2. Method as claimed in claim 1, **characterised** in that the alkylamine salt is selected from a group consisting of the following compounds:
NH₂((CH₂)ₙNH)ₘH x lX
wherein n = 2
m = 1 - 3
l = 1 - 4
and X is an organic or inorganic acid.

3. Method as claimed in claim 1 or 2, **characterised**in that the alkylamine salt is ethylenediamine dihydrochloride or ethylenediamine disulfamic acid.

4. Method as claimed in claim 1 or 2, **characterised** in that X is sulfamic acid, phosphoric acid, paratoluene sulphonic acid, hydrochloric acid, sulphuric acid.

5. Method as claimed in claim 1 or 2, **characterised** in that said amino resin is a urea/formaldehyde resin having a molar ratio of F/U of 0.85-2.5, and that the hardener composition is added in an amount of 1-40 parts by weight/100 parts of resin component.

6. Hardener composition for amino-resin-based adhesives for wood-based products, which composition contains alkylamine salt(s), **characterised** in that said hardener composition is water-based and that the alkylamine salt(s) is/are selected from a group consisting of the following compounds:
NH₂((CH₂)ₙNH)ₘH x lX
wherein n = 2
m = 1 - 3
l = 1 - 4
and X is an organic or inorganic acid; 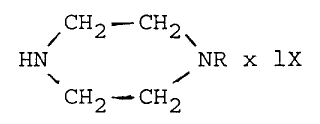 wherein R = H or CH₂CH₂NH₂ and X is an acid as above and l = 1 - 3;
and
CH₂CH₂(NHCH₂CH₂CH₂NH₂)₂ x lX
wherein l = 1 - 4 and X is an acid as above, whereby said hardener composition contains the following components:
| | |
|---|---|
| Alkylamine salt: | 0.2 - 50% by weight |
| Filler: | 5 - 65% by weight |
| Thickener: | 0.1 - 10% by weight |
| Formaldehyde absorbent: | 0 - 50% by weight |
wherein the amounts are stated in per cent by weight of the entire composition, and has a dry solids content of 15-85% by weight and a viscosity adjusted to a value of 800-25000 mPas at 20°C.

7. Hardener composition as claimed in claim 6, **characterised** in that said hardener composition contains the following components:
| | |
|---|---|
| Alkylamine salt: | 1 - 35% by weight |
| Filler: | 15 - 55% by weight |
| Thickener: | 0.3 - 7 % by weight |
| Formaldehyde absorbent: | 10 - 45% by weight |
wherein the amounts are stated in per cent by weight of the entire composition, and has a dry solids content of 30-85% by weight and a viscosity adjusted to a value of 1000-15000 mPas at 20°C.

8. Hardener composition for amino-resin-based adhesives for wood-based products, which composition contains alkylamine salt(s), **characterised** in that said hardener composition is a powder and the alkylamine salt(s) is/are selected from a group consisting of the following compounds:
NH₂((CH₂)ₙNH)ₘH x lX
wherein n = 2
m = 1 - 3
l = 1 - 4
and X is an organic or inorganic acid; 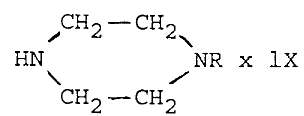 wherein R = H or CH₂CH₂NH₂ and X an acid as above and l = 1 - 3;
and
CH₂CH₂(NHCH₂CH₂CH₂NH₂)₂ x lX
wherein l = 1 - 4 and X has the same meaning as above, whereby said hardener composition contains the following components:
| | |
|---|---|
| Alkylamine salt: | 2 - 70% by weight |
| Filler: | 10 - 60% by weight |
| Thickener: | 0.08 - 10% by weight |
| Formaldehyde absorbent: | 5 - 60% by weight |
wherein the amounts are stated in per cent by weight of the entire composition.

9. Hardener composition as claimed in any one of claims 6-8, **characterised** in that the alkylamine salt is ethylenediamine dihydrochloride or ethylenediamine disulfamic acid.

10. Hardener composition for amino-resin-based adhesives for wood-based products, which composition contains alkylamine salt(s) and water and/or a filler, **characterised** in that said alkylamine salt(s) is/are selected from a group consisting of the following compounds:
NH₂((CH₂)ₙNH)ₘH x lX
wherein n = 2
m = 1 - 3
l = 1 - 4
and X is sulfamic acid, phosphoric acid, paratoluene sulphonic acid, or sulphuric acid; 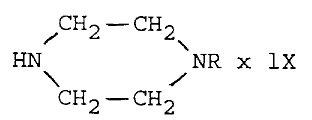 wherein R = H or CH₂CH₂NH₂ and X is an organic or inorganic acid and l = 1 - 3;
and
CH₂CH₂(NHCH₂CH₂CH₂NH₂)₂ x lX
wherein l = 1 - 4 and X is an organic or inorganic acid.

## Patentansprüche

1. Verfahren zum Verleimen von auf Holz basierenden Erzeugnissen durch flüssige Klebstoffe auf Aminoharz-Basis, wobei das Aminoharz durch eine Härterzusammensetzung, die ein Alkylaminsalz enthält, gehärtet wird, dadurch gekennzeichnet, daß das Alkylaminsalz ausgewählt ist aus der Gruppe der nachstehenden Verbindungen:
NH₂((CH₂)ₙNH)ₘH x lX
worin n = 2
m = 1 - 3
l = 1 - 4
und X eine organische oder anorganische Säure ist; 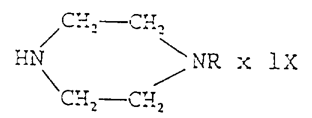 worin R = H oder CH₂CH₂NH₂ ist und X eine vorstehende Säure ist und l = 1 - 3 ist;
und CH₂CH₂(NHCH₂CH₂CH₂NH₂)₂ x lX, worin l = 1 - 4 ist und X die vorstehende Bedeutung hat.

2. Verfahren nach Anspruch 1, dadurch gekennzeichnet, daß das Alkylaminsalz ausgewählt ist aus der Gruppe der nachstehenden Verbindungen:
NH₂((CH₂)ₙNH)ₘHxlX
worin n = 2
m = 1-3
l = 1-4
und X eine organische oder anorganische Säure ist.

3. Verfahren nach Anspruch 1 oder 2, dadurch gekennzeichnet, daß das Alkylaminsalz Ethylendiamindihydrochlorid oder Ethylendiamindisulfaminsäure ist.

4. Verfahren nach Anspruch 1 oder 2, dadurch gekennzeichnet, daß X Sulfaminsäure, Phosphorsäure, p-Toluolsulfonsäure, Salzsäure, Schwefelsäure ist.

5. Verfahren nach Anspruch 1 oder 2, dadurch gekennzeichnet, daß das Aminoharz ein Harnstoff/Formaldehyd-Harz mit einem Molverhältnis F/U von 0,85 bis 2,5 ist und die Härterzusammensetzung in einer Menge von 1 bis 40 Gew.-Teilen/100 Teile der Harzkomponente zugesetzt wird.

6. Härterzusammensetzung für Klebstoffe auf Aminoharz-Basis für auf Holz basierende Erzeugnisse, die ein oder mehrere Alkylaminsalze enthält, dadurch gekennzeichnet, daß die Härterzusammensetzung auf Wasser basiert und daß das/die Alkylaminsalz(e) ausgewählt ist/sind aus der Gruppe der nachstehenden Verbindungen:
NH₂((CH₂)ₙNH)ₘH x lX
worin n = 2
m = 1 - 3
l = 1 - 4
und X eine organische oder anorganische Säure ist; 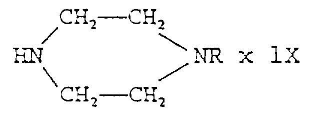 worin R = H oder CH₂CH₂NH₂ ist und X eine vorstehende Säure ist und l = 1 - 3 ist;
und CH₂CH₂(NHCH₂CH₂CH₂NH₂)₂ x lX, worin l = 1 - 4 ist, und X die vorstehende Bedeutung hat, wobei die Härterzusammensetzung die nachstehenden Komponenten enthält:
| | |
|---|---|
| Alkylaminsalz: | 0,2 - 50 Gew.-% |
| Füllstoff: | 5 - 65 Gew.-% |
| Verdickungsmittel: | 0,1 - 10 Gew.-% |
| Formaldehyd-Absorptionsmittel: | 0 - 50 Gew.-%, |
wobei die Mengen in Gewichtsprozent der gesamten Zusammensetzung angegeben sind; und einen Trockenfeststoffgehalt von 15 bis 85 Gew.-% und bei 20°C eine auf einen Wert von 800 bis 25000 mPa·s eingestellte Viskosität hat.

7. Härterzusammensetzung nach Anspruch 6, dadurch gekennzeichnet, daß die Härterzusammensetzung die nachstehenden Komponenten enthält:
| | |
|---|---|
| Alkylaminsalz: | 1 - 35 Gew.-% |
| Füllstoff: | 15 - 55 Gew.-% |
| Verdickungsmittel: | 0,3 - 7 Gew.-% |
| Formaldehyd-Absorptionsmittel: | 10 - 45 Gew.-%, |
wobei die Mengen als Gewichtsprozent der gesamten Zusammensetzung angegeben sind; und einen Trockenfeststoffgehalt von 30 bis 85 Gew.-% und bei 20°C eine auf einen Wert von 1000 bis 15000 mPa·s eingestellte Viskosität hat.

8. Härterzusammensetzung für Klebstoffe auf Aminoharz-Basis für auf Holz basierende Erzeugnisse, die ein oder mehrere Alkylaminsalze enthält, dadurch gekennzeichnet, daß die Härterzusammensetzung ein Pulver ist und daß das/die Alkylaminsalz(e) ausgewählt ist/sind aus der Gruppe der nachstehenden Verbindungen:
NH₂((CH₂)ₙNH)ₘH x lX
worin n = 2
m = 1 - 3
l = 1 - 4
und X eine organische oder anorganische Säure ist; 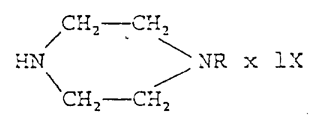 worin R = H oder CH₂CH₂NH₂ ist und X eine vorstehende Säure ist und l = 1 - 3 ist;
und CH₂CH₂(NHCH₂CH₂CH₂NH₂)₂ x lX, worin l = 1 - 4 ist, und X die vorstehende Bedeutung hat, wobei die Härterzusammensetzung die nachstehenden Komponenten enthält:
| | |
|---|---|
| Alkylaminsalz: | 2 - 70 Gew.-% |
| Füllstoff: | 10 - 60 Gew.-% |
| Verdickungsmittel: | 0,08 - 10 Gew.-% |
| Formaldehyd-Absorptionsmittel: | 5 - 60 Gew.-%, |
wobei die Mengen als Gewichtsprozent der gesamten Zusammensetzung angegeben sind.

9. Härterzusammensetzung nach einem der Ansprüche 6 bis 8, dadurch gekennzeichnet, daß das Alkylaminsalz Ethylendiamindihydrochlorid oder Ethylendiamindisulfaminsäure ist.

10. Härterzusammensetzung für Klebstoffe auf Aminoharz-Basis für auf Holz basierende Erzeugnisse, die ein oder mehrere Alkylaminsalze, Wasser und/oder einen Füllstoff enthält, dadurch gekennzeichnet, daß das/die Alkylaminsalz(e) ausgewählt ist/sind aus der Gruppe der nachstehenden Verbindungen:
NH₂((CH₂)ₙNH)ₘHxlX
worin n = 2
m = 1-3
l = 1-4
und X Sulfaminsäure, Phosphorsäure, p-Toluolsulfonsäure oder Schwefelsäure ist; 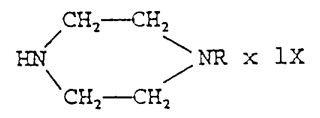 worin R = H oder CH₂CH₂NH₂ ist und X eine organische oder anorganische Säure ist und l = 1-3 ist;
und
CH₂CH₂(NHCH₂CH₂CH₂NH₂)₂xlX
worin l = 1-4 und X eine organische oder anorganische Säure ist.

## Revendications

1. Procédé de collage de produits à base de bois avec des compositions adhésives liquides à base de résines aminées, dans lequel on fait durcir la résine aminée à l'aide d'une composition d'agents de durcissement contenant un sel d'alkylamine, caractérisé en ce que le sel d'alkylamine est choisi dans l'ensemble constitué par les composés suivants de formules :
NH₂((CH₂)ₙNH)ₘH × lX
dans laquelle n = 2
m = 1 - 3
l = 1 - 4
et X représente un acide organique ou inorganique ; 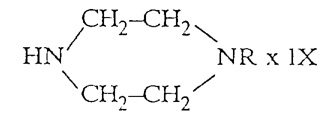 dans laquelle R = H ou CH₂CH₂NH₂ et X représente un acide tel qu'indiqué précédemment, et l = 1 - 3 ; et
CH₂CH₂(NHCH₂CH₂CH₂NH₂)₂ × lX
dans laquelle l = 1 - 4 et X a la même signification que précédemment.

2. Procédé selon la revendication 1, caractérisé en ce que le sel d'alkylamine est choisi dans l'ensemble constitué par les composés suivants :
NH₂((CH₂)ₙNH)ₘH × lX
dans lesquels n = 2
m = 1 - 3
l = 1 - 4
et X représente un acide organique ou inorganique.

3. Procédé selon la revendication 1 ou 2, caractérisé en ce que le sel d'alkylamine est le dichlorhydrate d'éthylènediamine ou l'acide éthylènediamine disulfamique.

4. Procédé selon la revendication 1 ou 2, caractérisé en ce que X représente l'acide sulfamique, l'acide phosphorique, l'acide para-toluène-sulfonique, l'acide chlorhydrique, l'acide sulfurique.

5. Procédé selon la revendication 1 ou 2, caractérisé en ce que ladite résine aminée est une résine urée/fomaldéhyde présentant un rapport molaire de F/U allant de 0,85 à 2,5, et en ce qu'on ajoute la composition d'agents de durcissement en une quantité de 1 à 40 parties en poids pour 100 parties de composant de résine.

6. Composition d'agents de durcissement pour des adhésifs à base de résines aminées pour des produits à base de bois, laquelle composition contient un ou des sels d'alkylamine, caractérisée en ce que ladite composition d'agents de durcissement est une composition aqueuse, et en ce que le(s) sel(s) d'alkylamine est/ sont choisis dans l'ensemble constitué par les composés de formules :
NH₂((CH₂)ₙNH)ₘH × lX
dans laquelle n = 2
m = 1 - 3
l = 1 - 4
et X représente un acide organique ou inorganique ; 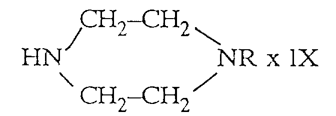 dans laquelle R = H ou CH₂CH₂NH₂ et X représente un acide tel qu'indiqué précédemment, et l = 1 - 3 ; et
CH₂CH₂(NHCH₂CH₂CH₂NH₂)₂ × lX
dans laquelle l = 1 - 4 et X représente un acide tel qu'indiqué précédemment, ladite composition d'agents de durcissement contenant les composants suivants :
| | |
|---|---|
| Sel d'alkylamine | 0,2 - 50% en poids |
| Charge | 5 - 65% en poids |
| Epaississant | 0,1 - 10% en poids |
| Agent absorbant le formaldéhyde | 0 - 50% en poids |
dans laquelle les quantités sont établies en pourcentages en poids de la composition totale, et présente une teneur en solides secs de 15 à 85% en poids et une viscosité ajustée à une valeur de 800 à 25000 mPa.s à 20°C.

7. Composition d'agents de durcissement selon la revendication 6, caractérisée en ce que ladite composition d'agents de durcissement contient les composants suivants :
| | |
|---|---|
| Sel d'alkylamine | 1 - 35% en poids |
| Charge | 15 - 55% en poids |
| Epaississant | 0,3 - 7% en poids |
| Agent absorbant le formaldéhyde | 10 - 45% en poids |
dans laquelle les quantités sont établies en pourcentages en poids de la composition totale, et présente une teneur en solides secs de 30 à 85% en poids et une viscosité ajustée à une valeur de 1000 à 15000 mPa.s à 20°C.

8. Composition d'agents de durcissement pour des adhésifs à base de résines aminées pour des produits à base de bois, laquelle composition contient un ou des sels d'alkylamine, caractérisée en ce que ladite composition d'agents de durcissement est une poudre, et le(s) sel(s) d'alkylamine est/sont choisis dans l'ensemble constitué par les composés suivants de formules :
NH₂((CH₂)ₙNH)ₘH × lX
dans laquelle n = 2
m = 1 - 3
l = 1 - 4
et X représente un acide organique ou inorganique ; 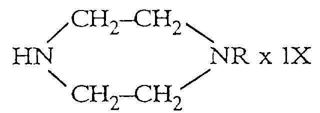 dans laquelle R = H ou CH₂CH₂NH₂ et X représente un acide tel qu'indiqué précédemment, et l = 1 - 3 ; et
CH₂CH₂(NHCH₂CH₂CH₂NH₂)₂ × lX
dans laquelle l = 1 - 4, et X a la même signification que précédemment, ladite composition d'agents de durcissement contenant les composants suivants :
| | |
|---|---|
| Sel d'alkylamine | 2 - 70% en poids |
| Charge | 10 - 60% en poids |
| Epaississant | 0,08 - 10% en poids |
| Agent absorbant le formaldéhyde | 5 - 60% en poids |
dans laquelle les quantités sont établies en pourcentages en poids de la composition totale.

9. Composition d'agents de durcissement selon l'une quelconque des revendications 6 à 8, caractérisée en ce que le sel d'alkylamine est le dichlorhydrate d'éthylènediamine, ou l'acide éthylènediamine-disulfamique.

10. Composition d'agents de durcissement pour des adhésifs à base de résines aminées pour des produits à base de bois, laquelle composition contient un ou des sels d'alkylamine et de l'eau et/ou une charge, caractérisée en ce que ledit sel ou lesdits sels d'alkylamine est ou sont choisis dans l'ensemble constitué par les composés suivants de formules :
NH₂((CH₂)ₙNH)ₘH × lX
dans laquelle n = 2
m = 1 - 3
l = 1 - 4
et X représente l'acide sulfamique, l'acide phosphorique, l'acide paratoluène-sulfonique, ou l'acide sulfurique ; 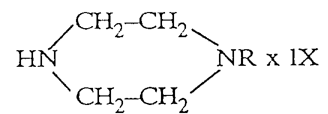 dans laquelle R = H ou CH₂CH₂NH₂ et X représente un acide organique ou inorganique, et l = 1 - 3 ; et
CH₂CH₂(NHCH₂CH₂CH₂NH₂)₂ × lX
dans laquelle l = 1 - 4 et X représente un acide organique ou inorganique.
